# EUROPÄISCHE PATENTSCHRIFT

(11) **EP 2 419 296 B1**
(45) Veröffentlichungstag und Bekanntmachung des Hinweises auf die Patenterteilung: **04.04.2018**
(21) Anmeldenummer: 10749604.4
(22) Anmeldetag: 20.08.2010
(51) Int. Cl.: B60N 2/22, B60N 2/02

(54) **ANTRIEBSEINHEIT FÜR EINEN FAHRZEUGSITZ**
DRIVE UNIT FOR A VEHICLE SEAT
UNITÉ D'ENTRAÎNEMENT POUR UN SIÈGE DE VÉHICULE

(30) Priorität: 01.09.2009 DE 102009040460
(43) Veröffentlichungstag der Anmeldung: 22.02.2012
(73) Patentinhaber: Adient Luxembourg Holding S.à r.l., 1855 Luxembourg (LU)
(72) Erfinder: BERRES, Michael, 51069 Köln (DE); GROSSBUDDE, Frank, 42389 Wuppertal (DE); STEMMER, Jürgen, 42897 Remscheid (DE); STILLEKE, Martin, 45657 Recklinghausen (DE); RABBACH, Andreas, 42697 Solingen (DE)
(74) Vertreter: Liedtke, Markus
(86) Internationale Anmeldenummer: PCT/EP2010/005105
(87) Internationale Veröffentlichungsnummer: WO 2011/026569

(56) Entgegenhaltungen:
- WO-A1-2009/022776
- DE-U1-202008 016 335
- FR-A1- 2 856 127

## Beschreibung

Die Erfindung betrifft eine Antriebseinheit für einen Fahrzeugsitz mit den Merkmalen des Oberbegriffs des Anspruches 1.

Aus der DE 197 09 852 C2 ist eine Antriebseinheit zur Verstellung von Sitzen bekannt. Ein Motor treibt mittels einer Schnecke eine Eingangsgetriebestufe an, welche wiederum ein Planetengetriebe als Ausgangsgetriebestufe antreibt. Das als Hohlrad ausgebildete Abtriebsrad weist in seinem Zentrum eine unrunde Lochung auf, in welche formschlüssig ein Formteil greift, das drehfest mit einer Welle verbunden ist, welche mit dem Abtriebsrad fluchtet.

Die FR 2 856 127 A1 offenbart eine Antriebseinheit der eingangs genannten Art für eine Verstellvorrichtung eines Kraftfahrzeugsitzes. Ein Motor treibt mittels einer Motorwelle, welche mit einer Schnecke versehen ist, ein Zwischenrad an, in welchem die Antriebswelle drehbar gelagert ist. Mit dem Zwischenrad fest verbunden ist ein Exzenterrad, dessen Radachse um eine Exzentrizität zur Antriebswelle versetzt ist. Das als Hohlrad ausgebildete Exzenterrad umgreift zwei Zahnräder mit unterschiedlicher Zähnezahl, die konzentrisch zueinander gelagert sind. Eines der beiden Zahnräder ist stationär und fest mit dem Gehäuse verbunden. Das andere Zahnrad dient als Abtriebsrad und weist einen Kern auf, um dessen stationäre Kernachse sich das Abtriebsrad dreht. Der Kern nimmt die Antriebswelle drehfest auf. Die Radachse läuft auf einem Kreis mit der Exzentrizität als Radius um die Antriebswelle, welche sich um ihre stationäre, mit der Kernachse fluchtende Wellenachse dreht. Ein ähnliches Getriebe ist in der DE 20 2008 016 335 U1 offenbart

Der Erfindung liegt die Aufgabe zu Grunde, eine Antriebseinheit der eingangs genannten Art zu verbessern. Diese Aufgabe wird erfindungsgemäß durch eine Antriebseinheit mit den Merkmalen des Anspruches 1 gelöst. Vorteilhafte Ausgestaltungen sind Gegenstand der Unteransprüche.

Dadurch, dass das Abtriebsrad mit einem um die Kernachse drehbaren Kern versehen ist, welcher eine Wellenaufnahme für eine Antriebswelle mit einer Wellenachse als zentraler Achse aufweist, wobei die Kernachse und die Wellenachse um eine Exzentrizität parallel zueinander versetzt sind, kann ein - beispielsweise zur Neigungseinstellung der Lehne vorgesehener - Beschlag mit einem Exzenterumlaufgetriebe auch auf der relativ zur Antriebswelle taumelnden Seite angetrieben werden, ohne dass ein besonderer Taumelausgleich notwendig wäre. Dies erhöht die Einsatzmöglichkeiten, sowohl der Antriebseinheit als auch des Beschlags.

Die Verwendung eines Exzenterumlaufgetriebes in einem (auf jeder Fahrzeugsitzseite vorhandenen) Beschlag erlaubt eine stufenlose Neigungseinstellung der Lehne eines Fahrzeugsitzes. Die Einsparung eines zentralen Ritzels gegenüber einem Planetenumlaufgetriebe führt zur Entstehung einer Taumelbewegung, die der relativen Drehung der Beschlagteile überlagert ist. Der Exzenter, der beispielsweise aus zwei mittels einer Feder auseinander gespannten Keilsegmenten oder aus einem sichelförmigen Element besteht, ist vorzugsweise auf seiner dem Gleitlager gegenüberliegenden Seite, beispielsweise der Innenseite, an einem Kragen des anderen Beschlagteils gelagert.

Um den erfindungsgemäßen Vorteil auszunützen, fluchten bei einem System aus erfindungsgemäßer Antriebseinheit und derartigen Beschlägen die beiden für den Exzenter relevanten Achsen mit den beiden von der Antriebseinheit zur Verfügung gestellten Achsen. Damit ist der Taumelausgleich dauerhaft gewährleistet.

Der Kern ist vorzugsweise gesondert vom Abtriebsrad ausgebildet, so dass die genaue Ausrichtung des Abtriebsrades für den Zusammenbau unerheblich ist. Kern und Abtriebswelle werden dann erst nach der Befestigung der Antriebseinheit und der Beschläge, welche beispielsweise gemeinsam an der Lehne erfolgt, eingebracht. Zudem kann in einem Baukastensystem ein weiterer Kern ohne Exzentrizität für Fälle bereitgestellt werden, in denen der Beschlag umgekehrt montiert werden soll, so dass kein Taumelausgleich notwendig wird. Zur Reduzierung der Anzahl der Bauteil können der Kern und das Abtriebsrad auch einstückig ausgebildet sein. Zur Vereinfachung der Herstellung kann auch der Grundkörper des Abtriebsrades getrennt von einem Lagerzapfen ausgebildet werden. Falls die Antriebseinheit und einer der beiden Beschläge räumlich dicht beieinander angeordnet sind, können auf dieser Fahrzeugsitzseite der Mitnehmer des Beschlags und der Kern der Antriebseinheit einstückig miteinander ausgebildet werden, so dass die Antriebswelle nur noch zur anderen Fahrzeugsitzseite reicht.

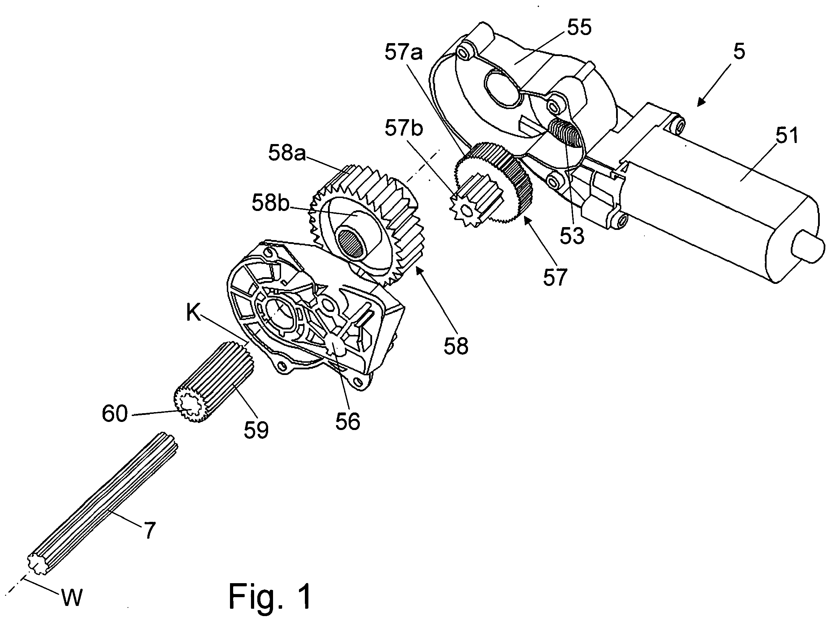

Im Folgenden ist die Erfindung anhand eines in der Zeichnung dargestellten Ausführungsbeispiels mit Abwandlungen näher erläutert. Es zeigen
- Fig. 1: eine teilweise schematisierte Explosionsdarstellung der Antriebseinheit,
- Fig. 2: eine Seitenansicht der Antriebseinheit,
- Fig. 3A: eine perspektivische Ansicht des Abtriebsrades,
- Fig. 3B: eine perspektivische Ansicht einer Abwandlung des Abtriebsrades,
- Fig. 3C: eine Explosionsdarstellung einer weiteren Abwandlung des Abtriebsrades,

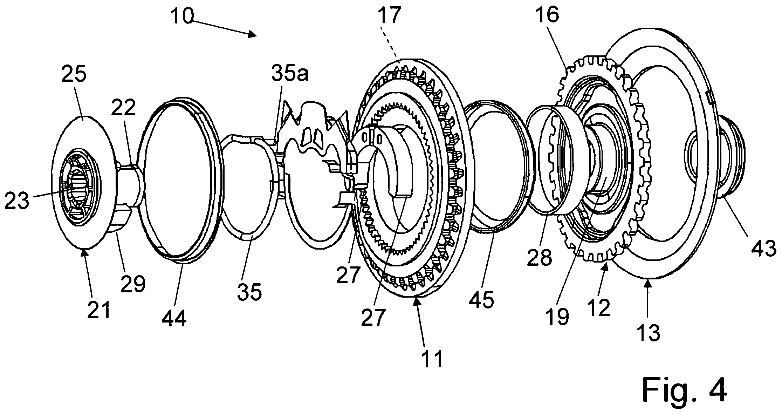

- Fig. 4: eine Explosionsdarstellung des Beschlags,

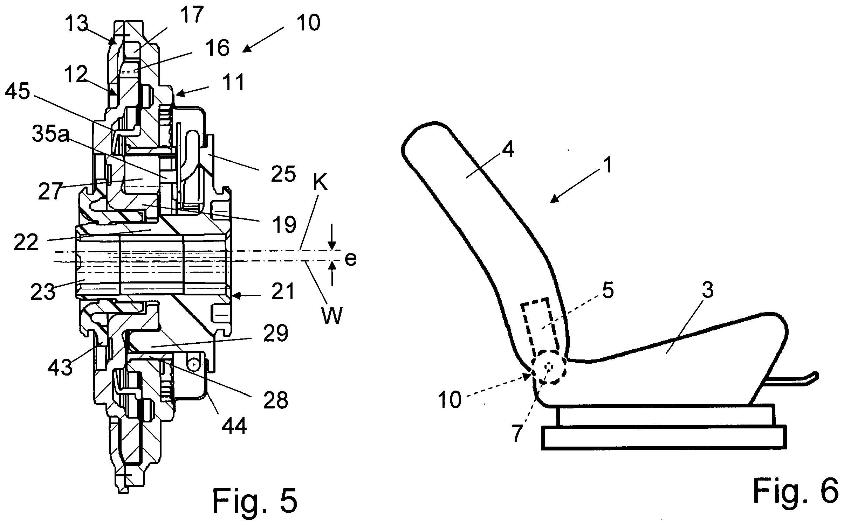

- Fig. 5: einen axialen Schnitt durch den Beschlag,
- Fig. 6: eine schematische Darstellung eines Fahrzeugsitzes, und

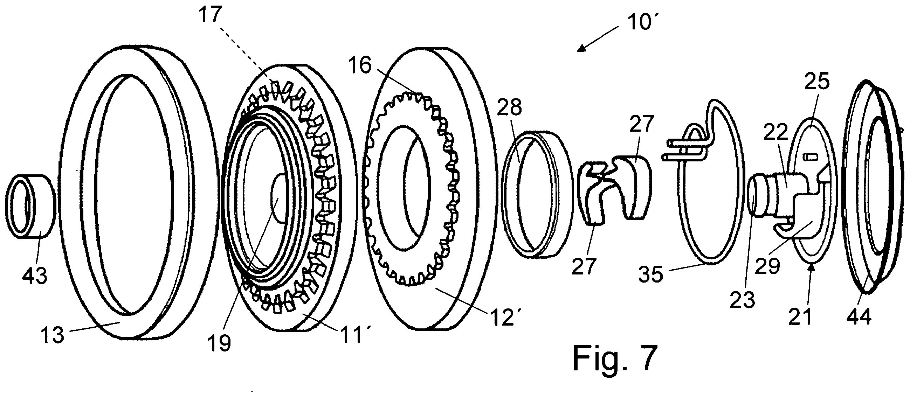

- Fig. 7: eine Explosionsdarstellung eines abgewandelten Beschlags.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird motorisch, vorliegend mittels einer Antriebseinheit 5, eine Antriebswelle 7 gedreht, welche horizontal im Übergangsbereich zwischen Sitzteil 3 und Lehne 4 angeordnet ist. Auf beiden Seiten des Fahrzeugsitzes 1 greift die Antriebswelle 7 auf eine später beschriebene Weise drehfest in einen Beschlag 10 ein. Die Antriebswelle 7 definiert die verwendeten Richtungsangaben eines Zylinderkoordinatensystems.

Der Beschlag 10 weist ein erstes Beschlagteil 11 und ein zweites Beschlagteil 12 auf, welche relativ zueinander verdrehbar sind. Die beiden Beschlagteile 11 und 12 lassen jeweils näherungsweise in eine kreisrunde Scheibenform einbeschreiben. Beide Beschlagteile 11 und 12 bestehen vorzugsweise aus Metall, insbesondere Stahl, der wenigstens bereichsweise gehärtet sein kann. Zur Aufnahme der axial wirkenden Kräfte, also zum axialen Zusammenhalt der Beschlagteile 11 und 12, ist ein Umklammerungsring 13 vorgesehen. Ein solcher Zusammenhalt mittels eines Umklammerungsrings ist beispielsweise in der US 6,799,806 B2 beschrieben. Der Umklammerungsring 13 besteht vorzugsweise aus Metall, insbesondere Stahl, der vorzugsweise ungehärtet ist. Der Umklammerungsring 13 weist eine im Wesentlichen flache Ringform auf.

Der Umklammerungsring 13 ist (vorliegend in einem äußeren Randabschnitt) fest mit einem der beiden Beschlagteile 11 und 12 verbunden, vorliegend dem ersten Beschlagteil 11, beispielsweise verschweißt oder (in Umfangsrichtung wenigstens teilweise) umgebördelt. Mittels eines radial nach innen weisenden Randabschnitts übergreift der Umklammerungsring 13, gegebenenfalls unter Zwischenlage eines separaten Gleitrings, das relativ zu ihm bewegliche, andere der beiden Beschlagteile 11 und 12 radial außen, ohne die Relativdrehung der beiden Beschlagteile 11 und 12 zu behindern. Zudem werden die einander zugewandten Innenflächen der beiden Beschlagteile 11 und 12 vor dem Eindringen von Fremdkörpern und der Verschmutzung und Beschädigung geschützt.

Der Umklammerungsring 13 und das mit ihm fest verbundene Beschlagteil 11 oder 12 umklammern also das relativ zu ihnen bewegliche, andere der beiden Beschlagteile 11 und 12. In baulicher Hinsicht bilden die beiden Beschlagteile 11 und 12 daher zusammen (mit dem Umklammerungsring 13) eine scheibenförmige Einheit.

Mit der Montage des Beschlags 10 ist das erste Beschlagteil 11 beispielsweise fest mit der Struktur der Lehne 4 verbunden, also lehnenteilfest. Das zweite Beschlagteil 12 ist dann fest mit der Struktur des Sitzteils 3 verbunden, also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Der Beschlag 10 liegt also im Kraftfluss zwischen Lehne 4 und Sitzteil 3.

Der Beschlag 10 ist als Getriebebeschlag ausgebildet, bei welchem ein erstes Beschlagteil 11 und ein zweites Beschlagteil 12 mittels eines Getriebes zum Verstellen und Feststellen miteinander verbunden sind, genauer gesagt mittels eines - vorliegend selbsthemmenden - Exzenterumlaufgetriebes, wie es beispielsweise in der DE 44 36 101 A1 beschrieben ist, deren diesbezüglicher Offenbarungsgehalt ausdrücklich einbezogen wird.

Zur Ausbildung des Getriebes ist am zweiten Beschlagteil 12 ein außenverzahntes Zahnrad 16 und am ersten Beschlagteil 11 ein innenverzahnter Zahnkranz 17 ausgebildet, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Ein entsprechender Unterschied der Zähneanzahl von Zahnrad 16 und Zahnkranz 17 von wenigstens einem Zahn ermöglicht eine Abwälzbewegung des Zahnkranzes 17 am Zahnrad 16. Die Ausbildung von Zahnrad 16 und Zahnkranz 17 erfolgt vorzugsweise mittels eines einzigen Präge-StanzVorgangs, der zugleich die Beschlagteile 11 und 12 aus ihrem Ausgangsmaterial ausstanzt. Alternativ können die Beschlagteile 11 und 12 - mit ähnlichen Geometrien und gleichen Funktionen - durch Massivumformung (vorzugsweise Kaltfließpressen oder Warmfließpressen) hergestellt werden. Vorliegend bildet das Zahnrad 16 den radial äußeren Rand des zweiten Beschlagteils 12, d.h. das zweite Beschlagteil 12 schließt radial außen mit dem Zahnrad 16 ab.

Eines der beiden Beschlagteile 11 und 12 weist einen Kragen 19 auf, vorliegend das zweite Beschlagteil 12 konzentrisch zum Zahnrad 16. Der Kragen 19 kann als Kragenzug an dem besagten Beschlagteil angeformt (d.h. einstückig ausgebildet) oder als separate Hülse daran befestigt sein. Im Kragen 19 ist ein Mitnehmer 21 mittels einer Nabe 22 drehbar gelagert. Der Mitnehmer 21 besteht vorzugsweise aus Kunststoff. Die Nabe 22 des Mitnehmers 21 ist zentral mit einer Bohrung 23 zur Aufnahme der Antriebswelle 7 versehen. Das Profil der Bohrung 23 ist passend zum Profil der Antriebswelle 7, vorliegend einem Keilwellenprofil, ausgebildet. Im Anschluss an seine Nabe 22 weist der Mitnehmer 21 eine einstückig mit der Nabe 22 ausgebildete Abdeckscheibe 25 mit größerem Durchmesser als die Nabe 22 auf.

Auf dem Kragen 19 sind zwei Keilsegmente 27 - mit ihren gekrümmten Innenflächen - abgestützt, die - mit ihren gekrümmten Außenflächen - das andere der beiden Beschlagteile 11 und 12, vorliegend das erste Beschlagteil 11, lagern. Hierfür ist eine Aufnahme des letztgenannten Beschlagteils mit einer vorzugsweise drehfest eingepressten Gleitlagerbuchse 28 ausgekleidet, an der die Außenflächen der Keilsegmente 27 anliegen. Die Begriffe "abstützen" und "lagern" sollen nicht auf eine bestimmte Richtung des Kraftflusses durch den Beschlag 10 beschränkt sein, da diese Richtung von der Montage des Beschlags 10 abhängt.

Der Mitnehmer 21 weist - radial beabstandet zur Nabe 22 - ein mit Spiel zwischen die Schmalseiten der Keilsegmente 27 fassendes Mitnehmersegment 29 auf, welches mit der Abdeckscheibe 25 und mit der Nabe 22 einstückig ausgebildet ist. Die Keilsegmente 27, deren Breitseiten einander zugekehrt sind, nehmen, beispielsweise mit je einer Öffnung oder einer durch vorspringende Materialpartien definierten Ausnehmung, jeweils einen abgewinkelten Endfinger 35a einer Omega-förmigen Feder 35 auf. Die Feder 35 beaufschlagt die Keilsegmente 27 in Umfangsrichtung, insbesondere um sie auseinander zu drücken, wobei im Betrieb die Breitseiten der Keilsegmente 27 einander berühren und beaufschlagen können.

Der Mitnehmer 21 wird auf der Außenseite des den Kragen 19 aufweisenden Beschlagteils durch einen vorzugsweise aufgeclipsten Sicherungsring 43 axial gesichert. Der Sicherungsrings 43 erstreckt sich in axialer Richtung entlang eines Teiles der Nabe 22, so dass die Nabe 22 nicht direkt an der Innenseite des Kragens 19 anliegt, sondern unter Zwischenlage des Sicherungsrings 43 im Kragen 19 gelagert ist (und dadurch der Mitnehmer 21 am zweiten Beschlagteil 12 gelagert ist). Auf der Außenseite des die Gleitlagerbuchse 28 aufweisenden Beschlagteils (vorliegend des ersten Beschlagteils 11) ist zwischen dessen radial äußerem Rand und der Abdeckscheibe 25 ein Dichtring 44 vorgesehen, beispielsweise aus Gummi oder weichem Kunststoff, der mit der Abdeckscheibe 25 verbunden ist, insbesondere verclipst ist. Der Dichtring 44 kann auch aus Metall ausgebildet und mit dem ersten Beschlagteil 11 fest verbunden, beispielsweise verschweißt, sein, wobei dann die Abdeckscheibe 25 relativ zum Dichtring 44 beweglich ist. Innerhalb des Bauraums zwischen den beiden Beschlagteilen 11 und 12 ist optional ein Trennring 45 als interne Dichtung vorgesehen, welcher beispielsweise aus Kunststoff besteht.

Durch die Keilsegmente 27 (und die Feder 35) wird ein Exzenter definiert, welcher in Verlängerung der Richtung der Exzentrizität das Zahnrad 16 an einer Eingriffsstelle in den Zahnkranz 17 drückt. Bei einem Antrieb durch die sich (mehrfach) drehende Antriebswelle 7 wird ein Drehmoment zunächst auf den Mitnehmer 21 und mittels des Mitnehmersegments 29 dann auf den so definierten Exzenter übertragen, welcher entlang der Gleitlagerbuchse 28 gleitet unter Verlagerung der Richtung der Exzentrizität und damit unter Verlagerung der Eingriffsstelle des Zahnrades 16 im Zahnkranz 17, was sich als taumelnde Abwälzbewegung darstellt, d.h. als Relativdrehung mit überlagerter Taumelbewegung. Die Neigung der Lehne 4 ist dadurch zwischen mehreren Gebrauchsstellungen stufenlos einstellbar.

Anstelle des einteiligen Mitnehmers 21 aus Kunststoff kann alternativ ein metallischer, einteiliger Mitnehmer, beispielsweise aus Zink- oder Aluminiumdruckguss, wie er beispielsweise in der US 7,314,250 B1 beschrieben ist, oder ein zweiteiligen Mitnehmer aus einem metallischen Ring (vorzugsweise ein Sintermaterial) mit Mitnehmersegment 29 und einem damit drehfest verbundenen Kunststoffbauteil mit Nabe 22 und Abdeckscheibe 25 verwendet werden, wie er beispielsweise in der US 2009/0127910 A1 beschrieben ist. Der diesbezügliche Offenbarungsgehalt der beiden genannten Druckschriften wird ausdrücklich einbezogen.

Die Antriebseinheit 5 weist einen Motor 51 auf, welcher mit einer Motorwelle 53 als Abtrieb versehen ist. Der Motor 51 ist beispielsweise ein elektronisch kommutierter Motor mit einem Stator und einem Rotor, welche die Motorwelle 53 definiert. Es kann auch ein bürstenkommutierter Motor 51 verwendet werden. Die Antriebseinheit 5 weist auch ein zweistufiges Getriebe auf, welches abtriebsseitig vom Motor 51 vorgesehen ist. Die Motorwelle 53 dient als Antrieb dieses Getriebes. Ein Getriebegehäuse 55, welches halboffen ausgebildet und am Motor 51 an dessen Motorgehäuse befestigt ist, und ein Getriebedeckel 56, welcher das Getriebegehäuse 55 schließt und an diesem befestigt ist, umschließen die Teile des Getriebes.

Das zweistufige Getriebe besteht vorliegend aus einem Schneckentrieb und einer Stirnradstufe. Der Schneckentrieb ergibt sich durch eine auf der Motorwelle 53 sitzende Schnecke, welche als ein angeformter (d.h. einstückiger) Bestandteil der Motorwelle 53 oder auf dieser aufgeschrumpft oder anderweitig befestigt ist, und einer mit der Schnecke kämmenden Antriebsverzahnung 57a eines geradverzahnten Stirnzahnrades, welches im Folgenden als Zwischenrad 57 bezeichnet ist und welches drehbar am Getriebegehäuse 55 und (mit dieser Lagerstelle fluchtend) am Getriebedeckel 56 gelagert ist. Das einstückig ausgebildete Zwischenrad 57 weist auf einer zu seiner Antriebsverzahnung 57a axial versetzten Stufe eine Abtriebsverzahnung 57b auf, die konzentrisch zur Antriebsverzahnung 57a des Zwischenrades 57 ist und einen kleineren Durchmesser aufweist. Die Stirnradstufe ergibt sich aus der Abtriebsverzahnung 57b des Zwischenrades 57 und einer damit kämmenden Antriebsverzahnung 58a eines weiteren geradverzahnten Stirnzahnrades, welches im Folgenden als Abtriebsrad 58 bezeichnet ist und welches drehbar am Getriebegehäuse 55 und (mit dieser Lagerstelle fluchtend) am Getriebedeckel 56 gelagert ist.

Das Abtriebsrad 58 weist an einem scheibenförmigen Grundkörper radial außen die Antriebsverzahnung 58a und einstückig damit ausgebildet einen Lagerzapfen 58b auf, welcher konzentrisch zur Antriebsverzahnung 58a in der Mitte des Abtriebsrades 58 angeordnet ist und axial vom Grundkörper absteht. Der axial durchgängig hohle Lagerzapfen 58b kann beispielsweise als Kragenzug ausgebildet sein. Die radiale Außenseite des Lagerzapfens 58b dient der Lagerung des Abtriebsrades 58. Ein vom Abtriebsrad 58 gesondert ausgebildeter Kern 59 mit zylindrischer Grundform ist in den hohlen Lagerzapfen 58b einbracht und durch Formschluss mit diesem drehfest verbunden, beispielsweise indem der Kern 59 profiliert ist und der Lagerzapfen 58b innen ein passendes Profil aufweist. Die zentrale Achse des Kerns 59 sei als Kernachse K bezeichnet. Das Abtriebsrad 58 ist um diese Kernachse K drehbar gelagert, und der Kern 59 dreht sich um die Kernachse K. Die Kernachse K definiert sich durch die profilfreie zylindrische Grundform des Kerns 59 (z.B. Fußkreis oder Kopfkreis bei näherungsweise zylindrischen, gezahnten Profilen) oder geht durch den gedachten Massenschwerpunkt des Kerns 59 (z.B. bei polygonalen Profilen). Der Lagerzapfen 58b ist noch nach dem Zusammenbau der Antriebseinheit 5 von außer an seinen Stirnseiten zugänglich, so dass der Kern 59 noch nachträglich einführbar ist.

Der Kern 59 weist eine axial durchgängige Wellenaufnahme 60 auf, welche zur drehfesten Aufnahme der Antriebswelle 7 ausgebildet ist. Das Profil der Wellenaufnahme 60 ist daher passend zum Profil der Antriebswelle 7, also vorliegend dem Keilwellenprofil, ausgebildet. Die zentrale Achse der Wellenaufnahme 60 sei als Wellenachse W bezeichnet. Die Wellenachse W definiert sich durch die profilfreie zylindrische Grundform der Wellenaufnahme 60 (z.B. Fußkreis oder Kopfkreis bei näherungsweise zylindrischen, gezahnten Profilen) oder geht durch den gedachten Massenschwerpunkt der Wellenaufnahme 60 (z.B. bei polygonalen Profilen). Erfindungsgemäß fluchten die Kernachse K und die Wellenachse W nicht miteinander, sondern sind parallel zueinander versetzt um eine Exzentrizität e. Diese Exzentrizität e ist zugleich die mittlere Exzentrizität des Beschlags 10, d.h. der mittlere Abstand der zentralen Achse des Kragens 19 (des zweiten Beschlagteils 12) zu der zentralen Achse der mit der Gleitlagerbuchse 28 ausgekleideten Aufnahme (des ersten beschlagteils 11) für den Exzenter. Die Exzentrizität des Beschlags 10 ist im sperrenden Zustand (Feststellen) zwar anders als während des Antriebsvorgangs (Verstellen), aber diese Unterschiede sind von vernachlässigbarer Größe.

Die Antriebseinheit 5 kann daher - wie das die Aufnahme für den Exzenter aufweisende Beschlagteil 11 oder 12 (vorliegend das erste Beschlagteil 11) - auch lehnenfest montiert sein. Beim Zusammenbau des Fahrzeugsitzes 1 wird die Antriebseinheit 5 so eingebaut, dass die Kernachse K (welche mit dem Lagerzapfen 58b und damit mit dem Abtriebsrad 58 fluchtet) mit dem ersten Beschlagteil 11 (welches mit seiner zentralen Aufnahme fluchtet) fluchtet, und zwar bei beiden Beschlägen 10, also auf beiden Fahrzeugsitzseiten. Die Antriebswelle 7 und der Kern 59 werden so eingebaut, dass die Antriebswelle 7 (welche mit der Nabe 22 des Mitnehmers 21 und dem Kragen 19 des zweiten Beschlagteils 12 fluchtet) mit der Wellenachse W fluchtet.

Im Betrieb, wenn die Antriebseinheit 5 die Antriebswelle 7 antreibt, überlagert die Antriebseinheit 5 der Drehung der Antriebswelle 7 eine taumelnde Bewegung, welche wiederum die taumelnde Abwälzbewegung der beiden Beschlagteile 11 und 12 ausgleicht. Da sich die Antriebswelle 7 - relativ zur Lehne 4 - nicht um die eigene Achse, also die Wellenachse W, dreht, sondern um die Kernachse K, und damit eine relative Bewegung im Raum vollführt, kann es sinnvoll sein, jeweils einen Schlauch von entsprechendem Durchmesser vorzusehen, welcher zwischen jeweils einem der Beschläge 10 und der Antriebseinheit 5 angeordnet und über die Antriebswelle 7 geschoben ist, so dass diese sich innerhalb des Schlauches dreht.

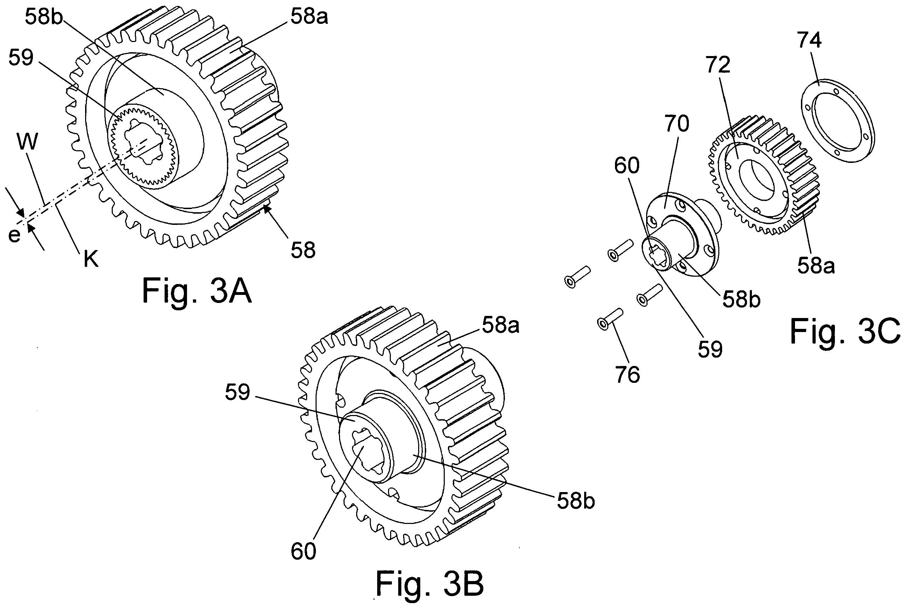

Für das Abtriebsrad 58 (Fig. 3A) sind mehrere Abwandlungen denkbar. So können der Kern 59 und der Lagerzapfen 58b einstückig ausgebildet sein (Fig. 3B). Der Lagerzapfen 58b weist dann direkt die Wellenaufhahme 60 auf. Damit wird die Anzahl der Bauteile reduziert, jedoch muss ein solches Abtriebsrad 58 bereits bei der Befestigung der Antriebseinheit 5 genau auf den Beschlag 10 ausgerichtet sein, d.h. die Wellenachse W auf dessen Kragen 19. Alternativ kann das Abtriebsrad 58 mehrteilig ausgebildet sein (Fig. 3C), d.h. der - mit dem Kern 59 einstückig ausgebildete - Lagerzapfen 58b und die Antriebsverzahnung 58a sind an verschiedenen Bauteilen vorgesehen. Beispielsweise kann eine Scheibe 70 mit dem Lagerzapfen 58b auf der einen Seite eines Zahnrad-Grundkörpers 72 mit der Antriebsverzahnung 58a angeordnet und durch diesen Zahnrad-Grundkörper 72 hindurch mit einer Gegenscheibe 74 auf der anderen Seite des Zahnrad-Grundkörpers 72 verbunden sein, beispielsweise mittels Schrauben 76 verschraubt sein. Je nach Befestigungsart muss auch ein solches Abtriebsrad 58 bereits bei der Befestigung der Antriebseinheit 5 genau auf den Beschlag 10 ausgerichtet sein.

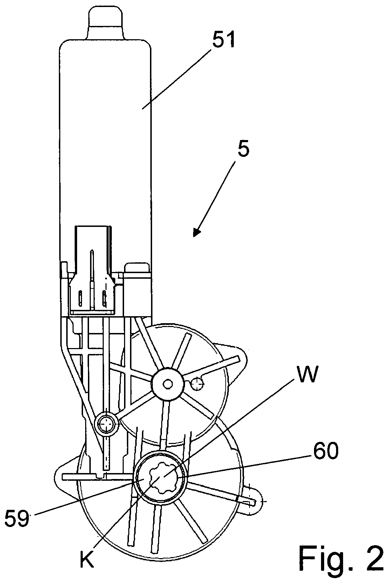

Die Antriebswelle 7 kann ein von einer zyklischen Symmetrie abweichendes Profil aufweisen, indem beispielsweise ein Zahn/Rippe (Fig. 2 bis 3C) oder alternativ eine Zahnlücke/Nut (nicht dargestellt) eines ansonsten symmetrischen Profils (vorliegend eines Keilwellenprofils) fehlt. Um eine möglichst geringe Materialschwächung des äußeren Randbereichs des Kerns 59 zu erhalten, wird die Wellenaufnahme 60 vorzugsweise so orientiert, dass der fehlende Zahn/Rippe radial nach außen weist (d.h. von der Kernachse K abgewandt) oder die fehlende Zahnlücke/Nut radial nach innen weist (d.h. der Kernachse K zugewandt).

Die Antriebseinheit 5 kann auch mit einem abgewandelten Beschlag 10' (mit inverser Lagerung des Exzenters) verwendet werden, dessen sitzteilfestes erstes Beschlagteil 11' den Zahnkranz 17 und den Kragen 19 und dessen lehnenfestes zweites Beschlagteil 12' das Zahnrad 16 und die (mit der Gleitlagerbuchse 28 ausgekleidete) Aufnahme für den Exzenter aufweist. Die Kernachse K fluchtet dann mit der Aufnahme des zweiten Beschlagteils 12', während die Wellenachse W mit der Nabe 22 des Mitnehmers 21 und dem Kragen 19 des ersten Beschlagteils 11' fluchtet. Die Antriebseinheit 5 kann auch bei einem abgewandelten Beschlag verwendet werden, dessen Beschlagteile radial abstehende Flansche aufweisen, wie er beispielsweise in der DE 44 36 101 A1 oder der DE 199 38 666 A1 beschrieben ist.

### Bezugszeichenliste

- 1: Fahrzeugsitz
- 3: Sitzteil
- 4: Lehne
- 5: Antriebseinheit
- 7: Antriebswelle
- 10, 10': Beschlag
- 11, 11': erstes Beschlagteil
- 12, 12': zweites Beschlagteil
- 13: Umklammerungsring
- 16: Zahnrad
- 17: Zahnkranz
- 19: Kragen
- 21: Mitnehmer
- 22: Nabe
- 23: Bohrung
- 25: Abdeckscheibe
- 27: Keilsegment
- 28: Gleitlagerbuchse
- 29: Mitnehmersegment
- 35: Feder
- 35a: Endfinger
- 43: Sicherungsring
- 44: Dichtring
- 45: Trennring
- 51: Motor
- 53: Motorwelle
- 55: Getriebegehäuse
- 56: Getriebedeckel
- 57: Zwischenrad
- 57a: Antriebsverzahnung (des Zwischenrades)
- 57b: Abtriebsverzahnung (des Zwischenrades)
- 58: Abtriebsrad
- 58a: Antriebsverzahnung (des Abtriebsrades)
- 58b: Lagerzapfen
- 59: Kern
- 60: Wellenaufhahme
- 70: Scheibe
- 72: Zahnrad-Grundkörper
- 74: Gegenscheibe
- 76: Schrauben
- e: Exzentrizität
- K: Kernachse
- W: Wellenachse

## Patentansprüche

1. Antriebseinheit für einen Fahrzeugsitz, insbesondere für einen Kraftfahrzeugsitz, mit
- einem Motor (51) und
- einem abtriebsseitig vom Motor (51) vorgesehenen Getriebe, welches wenigstens ein um eine Kernachse (K) drehbar gelagertes Abtriebsrad (58) mit einer Antriebsverzahnung (58a) aufweist, das mit einem um die Kernachse (K) drehbaren Kern (59) versehen ist, welcher eine profilierte Wellenaufnahme (60) zur drehfesten Aufnahme einer passend profilierten Antriebswelle (7) mit einer Wellenachse (W) als zentraler Achse aufweist, wobei
- die Kernachse (K) und die Wellenachse (W) um eine Exzentrizität (e) parallel zueinander versetzt sind,
- das Getriebe ein antriebseitig mittels einer Antriebsverzahnung (57a) mit dem Motor (51) gekoppeltes Zwischenrad (57) aufweist,
- **dadurch gekennzeichnet, dass** das Zwischenrad (57) auf einer zu seiner Antriebsverzahnung (57a) axial versetzten Stufe eine zur Antriebsverzahnung (57a) konzentrische Abtriebsverzahnung (57b) mit gegenüber der Antriebsverzahnung (57a) kleinerem Durchmesser aufweist, wobei die Abtriebsverzahnung (57b) des Zwischenrades (57) in kämmendem Eingriff mit der Antriebsverzahnung (58a) des Abtriebsrads (58) steht, so dass im Betrieb, wenn die Antriebseinheit (5) die Antriebswelle (7) antreibt, die Antriebseinheit (5) der Drehung der Antriebswelle (7) eine taumelnde Bewegung überlagert und die sich um die Kernachse (K) drehende die Antriebswelle (7) eine relative Bewegung im Raum vollführt.

2. Antriebseinheit nach Anspruch 1, **dadurch gekennzeichnet, dass** die Wellenachse (W) sich durch eine profilfreie zylindrische Grundform der Wellenaufnahme (60) oder durch den gedachten Massenschwerpunkt der Wellenaufnahme (60) definiert.

3. Antriebseinheit nach einem der vorhergehenden Ansprüche, **dadurch gekennzeichnet, dass** der Kern (59) vom Abtriebsrad (58) gesondert ausgebildet und mit diesem drehfest verbunden ist.

4. Antriebseinheit nach Anspruch 3, **dadurch gekennzeichnet, dass** der profilierte Kern (59) in einen hohlen, passend profilierten Lagerzapfen (58b) des Abtriebsrades (58) eingeführt ist.

5. Antriebseinheit nach Anspruch 4, **dadurch gekennzeichnet, dass** die Kernachse (K) sich durch eine profilfreie zylindrische Grundform des Kerns (59) oder durch den Massenschwerpunkt des Kerns (59) definiert.

6. Antriebseinheit nach einem der Ansprüche 1 bis 4, **dadurch gekennzeichnet, dass** der Kern (59) einstückig mit einem Lagerzapfen (58b) zur Lagerung des Abtriebsrades (58) ausgebildet ist.

7. Antriebseinheit nach einem der vorhergehenden Ansprüche, **dadurch gekennzeichnet, dass** ein Lagerzapfen (58b) zur Lagerung des Abtriebsrades (58) ein einstückiger Bestandteil des Abtriebsrades (58) ist.

8. System aus einer Antriebseinheit (5) nach einem der vorhergehenden Ansprüche und aus wenigstens einem Beschlag (10), der ein Exzenterumlaufgetriebe mit der Exzentrizität (e) als mittlerer Exzentrizität aufweist.

9. System nach Anspruch 8, **dadurch gekennzeichnet, dass** der Beschlag (10) ein erstes Beschlagteil (11), an welchem ein Zahnkranz (17) ausgebildet ist, ein zweites Beschlagteil (12), an welchem ein Zahnrad (16) ausgebildet ist, welches mit dem Zahnkranz (17) kämmt, wodurch die beiden Beschlagteile (11, 12) miteinander in Getriebeverbindung stehen, und einen drehbar gelagerten, von einem Mitnehmer (21) angetriebenen, umlaufenden Exzenter (27) zum Antrieb einer relativen Abwälzbewegung von Zahnrad (16) und Zahnkranz (17) aufweist.

10. System nach Anspruch 9, **dadurch gekennzeichnet, dass** der Exzenter (27) das eine, eine zentrale Aufnahme aufweisende Beschlagteil (11) lagert und seinerseits auf einem Kragen (19) des anderen Beschlagteils (12) gelagert ist.

11. System nach Anspruch 10, **dadurch gekennzeichnet, dass** die zentrale Aufnahme des einen Beschlagteils (11) mit der Kernachse (K) und der Kragen (19) des anderen Beschlagteils (12) mit der Wellenachse (W) fluchtet.

12. Fahrzeugsitz, insbesondere Kraftfahrzeugsitz, mit einem Sitzteil (3) und einer Lehne (4), deren Neigung mittels eines Systems nach einem der Ansprüche 9 bis 11 einstellbar ist, wobei die Antriebseinheit (5) an der Lehne (4) befestigt ist.

## Claims

1. Drive unit for a vehicle seat, in particular for a motor vehicle seat, having
- a motor (51)and
- a gear unit which is provided on the drive output side of the motor (51) and which has at least a drive output wheel (58) which is rotatably supported about a core axis (K), has a drive input toothing (58a) and is provided with a core (59) which is rotatable about the core axis (K), which has a profiled shaft receptacle (60) for receiving in a rotationally secure manner a drive shaft (7) having a corresponding profile and a shaft axis (W) as central axis,
- the core axis (K) and the shaft axis (W) being offset in parallel by an eccentricity (e),
- the gear unit having an intermediate gear (57) which is coupled to the motor (51) on the drive input side by means of a drive input toothing (57a),
**characterized in that** the intermediate gear (57), on a step which is axially offset with respect to its drive input toothing (57a), has a drive output toothing (57b) which is concentric to the drive input toothing (57a) and has a smaller diameter than the drive input toothing (57a), the drive output toothing (57b) of the intermediate gear (57) meshing with the drive input toothing (58a) of the drive output wheel (58) so that, during operation, when the drive unit (5) drives the drive shaft (7), the drive unit (5) superimposes a wobbling movement on the rotation of the drive shaft (7) and the drive shaft (7) which rotates about the core axis (K) carries out a relative movement in space.

2. The drive unit as per Claim 1, **characterized in that** the shaft axis (W) defines itself by a profile-free cylindrical basic shape of the shaft receptacle (60) or by the imaginary center of gravity of the shaft receptacle (60) .

3. The drive unit as per one of the preceding claims, **characterized in that** the core (59) is configured separately from the drive output wheel (58) and is connected with it so as to be rotationally secure.

4. The drive unit as per Claim 3, **characterized in that** the profiled core (59) is introduced in a hollow journal pin (58b) of the drive output wheel (58), such journal pin having a profile which matches.

5. The drive unit as per Claim 4, **characterized in that** the core axis (K) is defined by a profile-free cylindrical basic shape of the core (59) or by the centre of gravity of the core (59).

6. The drive unit as per one of Claims 1 to 4, **characterized in that** the core (59) is configured in one piece with a journal pin (58b) for supporting the drive output wheel (58).

7. The drive unit as per one of the preceding claims, **characterized in that** a journal pin (58b) for supporting the drive output wheel (58) is a one-piece component of the drive output wheel (58).

8. System of a drive unit (5) as per one of the preceding claims having at least one fitting (10) which has a eccentric epicyclic gear with the eccentricity (e) as mean eccentricity.

9. The system as per Claim 8, **characterized in that** the fitting (10) has a first fitting part (11), on which a toothed ring (17) is configured, a second fitting part (12), on which a toothed wheel (16) is configured, which meshes with the toothed ring (17), the two fitting parts (11, 12) thus being in geared connection with each other, and has a rotatably supported rotating eccentric (27) which is driven by a driver (21), for driving a relative rolling movement of toothed wheel (16) and toothed ring (17) .

10. The system as per Claim 9, **characterized in that** the eccentric (27) supports the one fitting part (11), having a central receptacle and, on its part, is supported on a collar (19) of the other fitting part (12).

11. The system as per Claim 10, **characterized in that** the central receptacle of the one fitting part (11) is aligned with the core axis (K), and the collar (19) of the other fitting part (12) is aligned with the shaft axis (W).

12. A vehicle seat, in particular a motor vehicle seat, having a seat part (3) and a backrest (4), the inclination of which is adjustable by means of a system as per one of the Claims 9 to 11, wherein the drive unit (5) is fixed to the backrest (4).

## Revendications

1. Unité d'entraînement pour un siège de véhicule, en particulier pour un siège de véhicule automobile, avec
- un moteur (51) et
- une transmission prévue à la sortie du moteur (51), qui présente au moins une roue de sortie (58) montée de façon rotative autour d'un axe de noyau (K) avec une denture d'entraînement (58a), qui est dotée d'un noyau (59) pouvant tourner autour de l'axe de noyau (K), qui présente un logement d'arbre profilé (60) destiné à contenir sans rotation un arbre d'entraînement profilé de façon correspondante (7) avec un axe d'arbre (W) comme axe central,
dans laquelle
- l'axe de noyau (K) et l'axe d'arbre (W) sont décalés parallèlement l'un à l'autre d'une excentricité (e),
- la transmission présente une roue intermédiaire (57) couplée au moteur (51) côté entraînement au moyen d'une denture d'entraînement (57a),
**caractérisée en ce que** la roue intermédiaire (57) présente sur un étage décalé axialement de sa denture d'entraînement (57a) une denture de sortie (57b) concentrique à la denture d'entraînement (57a) avec un plus petit diamètre que la denture d'entraînement (57a), dans laquelle la denture de sortie (57b) de la roue intermédiaire (57) est en prise d'engrènement avec la denture d'entraînement (58a) de la roue de sortie (58), de telle manière qu'en fonctionnement, lorsque l'unité d'entraînement (5) entraîne l'arbre d'entraînement (7), l'unité d'entraînement (5) superpose à la rotation de l'arbre d'entraînement (7) un mouvement d'oscillation et l'arbre d'entraînement (7) tournant autour de l'axe de noyau (K) accomplit un mouvement relatif dans l'espace.

2. Unité d'entraînement selon la revendication 1, **caractérisée en ce que** l'axe d'arbre (W) se définit par une forme de base cylindrique sans profil du logement d'arbre (60) ou par le centre de gravité virtuel du logement d'arbre (60).

3. Unité d'entraînement selon l'une quelconque des revendications précédentes, **caractérisée en ce que** le noyau (59) est formé séparément de la roue de sortie (58) et est assemblé sans rotation à celle-ci.

4. Unité d'entraînement selon la revendication 3, **caractérisée en ce que** le noyau profilé (59) est introduit dans un tourillon d'appui creux (58b) de profil correspondant de la roue de sortie (58).

5. Unité d'entraînement selon la revendication 4, **caractérisée en ce que** l'axe de noyau (K) se définit par une forme de base cylindrique sans profil du noyau (59) ou par le centre de gravité du noyau (59).

6. Unité d'entraînement selon l'une quelconque des revendications 1 à 4, **caractérisée en ce que** le noyau (59) est formé d'une seule pièce avec le tourillon d'appui (58b) pour supporter la roue de sortie (58).

7. Unité d'entraînement selon l'une quelconque des revendications précédentes, **caractérisée en ce qu'**un tourillon d'appui (58b) pour le support de la roue de sortie (58) est un composant d'une seule pièce de la roue de sortie (58).

8. Système composé d'une unité d'entraînement (5) selon l'une quelconque des revendications précédentes et d'au moins un mécanisme (10), qui présente une transmission rotative excentrique avec l'excentricité (e) comme excentricité moyenne.

9. Système selon la revendication 8, **caractérisé en ce que** le mécanisme (10) présente une première partie de mécanisme (11), sur laquelle une couronne dentée (17) est formée, une deuxième partie de mécanisme (12), sur laquelle une roue dentée (16) est formée, qui engrène avec la couronne dentée (17), par lesquelles les deux parties de mécanisme (11, 12) sont en relation de transmission l'une avec l'autre, et un excentrique tournant (27), supporté de façon rotative et entraîné par un élément d'entraînement (21), pour l'entraînement d'un mouvement de roulement relatif de la roue dentée (16) et de la couronne dentée (17).

10. Système selon la revendication 9, **caractérisé en ce que** l'excentrique (27) supporte la première partie de mécanisme (11) présentant un logement central et est de son côté supporté sur un rebord (19) de l'autre partie de mécanisme (12).

11. Système selon la revendication 10, **caractérisé en ce que** le logement central de la première partie de mécanisme (11) est aligné avec l'axe de noyau (K) et le rebord (19) de l'autre partie de mécanisme (12) est aligné avec l'axe d'arbre (W).

12. Siège de véhicule, en particulier siège de véhicule automobile, avec une partie de siège (3) et un dossier (4), dont l'inclinaison est réglable au moyen d'un système selon l'une des revendications 9 à 11, dans lequel l'unité d'entraînement (5) est fixée au dossier (4) .
